# EUROPEAN PATENT APPLICATION

(11) **EP 4 633 212 A1**
(43) Date of publication of application: **15.10.2025**
(21) Application number: 23909915.3
(22) Date of filing: 30.11.2023
(51) Int. Cl.: H04W 8/08

(54) **COMMUNICATION METHOD AND APPARATUS**

(30) Priority: 30.12.2022 CN 202211725087
(71) Applicant: Huawei Technologies Co., Ltd., Shenzhen, Guangdong 518129 (CN)
(72) Inventor: ZENG, Yu, Shenzhen, Guangdong 518129 (CN); GENG, Tingting, Shenzhen, Guangdong 518129 (CN)
(74) Representative: Körber, Martin Hans
(86) International application number: PCT/CN2023/135414
(87) International publication number: WO 2024/139985

(57) **Abstract**

Embodiments of this application provide a communication method and apparatus. The method is applied to transmission of related information of an artificial intelligence AI model over an air interface. The method includes: A first device and a second device obtain a transmission manner of related information of an AI model, and transmit the related information of the AI model between the first device and the second device in the transmission manner. The first device is an access network device, and the second device is a terminal device; or the first device is a terminal device, and the second device is an access network device. According to the solutions provided in embodiments of this application, an appropriate transmission manner can be obtained for transmitting the related information of the AI model, to satisfy transmission requirements of the AI model in different application scenarios.

## Description

This application claims priority to Chinese Patent Application No. 202211725087.X, filed with the China National Intellectual Property Administration on December 30, 2022 and entitled "COMMUNICATION METHOD AND APPARATUS", which is incorporated herein by reference in its entirety.

### TECHNICAL FIELD

Embodiments of this application relate to the communication field, and more specifically, to a communication method and apparatus.

### BACKGROUND

With improvement of data storage and computing capabilities, an artificial intelligence (artificial intelligence, AI) technology is increasingly used. The AI technology may be used in a communication system such as a new radio (new radio, NR) system, to improve network performance and user experience by intelligently collecting and analyzing data.

A plurality of AI application scenarios on a radio access network (radio access network, RAN) side are introduced into the 3rd generation partnership project (3rd generation partnership project, 3GPP). In some AI application scenarios, a terminal device may implement some AI functions, and an access network device may transmit an AI model to the terminal device. In addition, in some AI application scenarios on a terminal device side, the access network device may implement some AI functions, and the terminal device may transmit an AI model to the access network device. When the AI model is to be transmitted over an air interface, how to determine an appropriate transmission manner to satisfy a requirement in an AI application scenario is an urgent problem to be resolved.

### SUMMARY

Embodiments of this application provide a communication method and apparatus, to obtain an appropriate transmission manner for transmitting related information of an AI model, so as to satisfy transmission requirements of the AI model in different application scenarios.

According to a first aspect, a communication method is provided, applied to a first device. The method may be performed by the first device, or may be performed by a component (for example, a chip or a circuit) of the first device. This is not limited. For ease of description, the following provides descriptions by using an example in which the method is performed by the first device.

The method may include: The first device obtains a transmission manner of related information of an AI model, and the first device sends the related information of the AI model to a second device in the transmission manner. The first device is an access network device, and the second device is a terminal device; or the first device is a terminal device, and the second device is an access network device.

Based on the foregoing solution, the first device can obtain an appropriate transmission manner for transmitting the related information of the AI model, to satisfy transmission requirements of the AI model in different application scenarios. A transmission requirement is, for example, a latency requirement. In other words, the transmission manner determined by the first device may vary as application scenarios of the AI model, and is flexible. The related information of the AI model is, for example, a part or all of body data, structure information, or parameter information of the AI model. The second device can restore the AI model based on the related information of the AI model.

With reference to the first aspect, in some implementations of the first aspect, the first device receives first reference information from the second device, and the first device determines the transmission manner based on the first reference information.

Based on the foregoing solution, the transmission manner determined by the first device better satisfies a transmission requirement of the second device for the AI model, to avoid deterioration in performance of using the AI model by the second device due to an inappropriate transmission manner.

With reference to the first aspect, in some implementations of the first aspect, the first reference information includes at least one of the following: information about a first candidate AI model set expected by the second device, buffering capability information of the second device, transmission latency requirement information, or information about a transmission manner expected by the second device.

Based on the foregoing solution, if the first reference information includes the information about the first candidate AI model set, the first device may determine the to-be-transmitted AI model based on the information about the first candidate AI model set. If the first reference information includes the buffering capability information of the second device, the first device may determine the transmission manner based on the buffering capability information, so that the related information of the AI model transmitted by the first device does not exceed a buffering capability of the second device. If the first reference information includes the transmission latency requirement information, the first device may complete transmission of the related information of the AI model in accordance with a latency requirement based on the transmission latency requirement information, to avoid affecting use performance of the AI model when the second device cannot use the AI model at appropriate time because the related information of the AI model transmitted by the first device times out. If the first reference information includes the transmission manner expected by the second device, the first device may determine the transmission manner of the related information of the AI model based on the expected transmission manner, so that the determined transmission manner better satisfies a transmission requirement of the second device for the AI model.

With reference to the first aspect, in some implementations of the first aspect, the method further includes: The first device sends first indication information to the second device, where the first indication information indicates the transmission manner.

Based on the foregoing solution, after obtaining the transmission manner, the first device may notify the second device of the transmission manner, so that the second device can know the transmission manner of the related information of the to-be-transmitted AI model, and receive the related information of the AI model in the transmission manner. For example, the related information of the AI model is transmitted in blocks. The first device notifies the second device of the block-based transmission manner, to avoid failure to assemble the complete AI model because the second device starts to assemble the AI model before all blocks of the related information of the AI model are transmitted. Therefore, this solution can improve accuracy of assembling the AI model by the second device.

With reference to the first aspect, in some implementations of the first aspect, the method further includes: The first device receives second indication information from the second device, where the second indication information indicates the transmission manner; and the first device obtains the transmission manner based on the second indication information.

Based on the foregoing solution, the transmission manner obtained by the first device may be indicated by the second device. In other words, the first device does not need to determine the transmission manner of the related information of the AI model, to reduce execution complexity of the first device.

With reference to the first aspect, in some implementations of the first aspect, the method further includes: The first device sends second reference information to the second device, where the second reference information includes at least one of information about a second candidate AI model set or information about a candidate transmission manner. The first device receives third indication information from the second device, and obtains the transmission manner based on the third indication information, where the third indication information indicates the transmission manner determined based on the second reference information, and the second reference information is determined based on the first reference information.

Based on the foregoing solution, the transmission manner obtained by the first device may be indicated by the second device, and the first device provides reference information for the second device to determine the transmission manner, so that the transmission manner determined by the second device better satisfies transmission requirements of the first device and the second device, to reduce impact caused by an inappropriate transmission manner on performance of using the AI model by the second device.

With reference to the first aspect, in some implementations of the first aspect, when the second reference information includes the information about the second candidate AI model set, the AI model indicated by the third indication information is determined based on the information about the second candidate AI model set; or when the second reference information includes the information about the candidate transmission manner, the transmission manner indicated by the third indication information is determined based on the information about the candidate transmission manner.

With reference to the first aspect, in some implementations of the first aspect, the transmission manner is transmitting the related information of the AI model as a whole, or transmitting the related information of the AI model in blocks.

Based on the foregoing solution, when a capacity of the AI model is small, the related information of the AI model may be transmitted as a whole. On the contrary, when a capacity of the AI model is large, the related information of the AI model may be transmitted in blocks. This solution can avoid impact on transmission of other signaling and data, for example, congestion of the other signaling and data, caused by an excessively large data amount of the related information of the AI model sent in a single transmission.

With reference to the first aspect, in some implementations of the first aspect, the transmission manner is transmitting the related information of the AI model in blocks, and the related information of the AI model includes block identifiers.

Based on the foregoing solution, in a case of block-based transmission, the first device transmits the block identifiers to the second device, so that the second device can identify related information of each block of the disassembled AI model based on the block identifiers, and the second device can more accurately assemble the AI model.

With reference to the first aspect, in some implementations of the first aspect, the method further includes: The first device sends update information to the second device, where the update information is used to update the AI model.

Based on the foregoing solution, when the AI model needs to be updated, the first device can send the update information, so that the second device updates the AI model in a timely manner, to improve application performance of the AI model.

With reference to the first aspect, in some implementations of the first aspect, a transmission path of the related information of the AI model includes user plane transmission and/or control plane transmission.

According to a second aspect, a communication method is provided, applied to a second device. The method may be performed by the second device, or may be performed by a component (for example, a chip or a circuit) of the second device. This is not limited. For ease of description, the following provides descriptions by using an example in which the method is performed by the second device.

The method may include: The second device obtains a transmission manner of related information of an AI model, and the second device receives the related information of the AI model from a first device in the transmission manner. The first device is an access network device, and the second device is a terminal device; or the first device is a terminal device, and the second device is an access network device.

Based on the foregoing solution, the second device can obtain an appropriate transmission manner of the related information of the AI model, to satisfy transmission requirements of the AI model in different application scenarios. A transmission requirement is, for example, a latency requirement. In other words, the transmission manner determined by the first device may vary as application scenarios of the AI model, and is flexible.

With reference to the second aspect, in some implementations of the second aspect, the method further includes: The second device sends first reference information to the first device, where the first reference information is used to determine the transmission manner.

Based on the foregoing solution, the second device can provide reference information for the first device, so that the transmission manner determined by the first device better satisfies a transmission requirement of the second device for the AI model, to avoid deterioration in performance of using the AI model by the second device due to an inappropriate transmission manner.

With reference to the second aspect, in some implementations of the second aspect, the first reference information includes at least one of the following: information about a first candidate AI model set expected by the second device, buffering capability information of the second device, transmission latency requirement information, or information about a transmission manner expected by the second device.

Based on the foregoing solution, if the first reference information includes the information about the first candidate AI model set, the first device may determine the to-be-transmitted AI model based on the first candidate AI model set. If the first reference information includes the buffering capability information of the second device, the first device may determine the transmission manner based on the buffering capability information, so that the related information of the AI model transmitted by the first device does not exceed a buffering capability of the second device. If the first reference information includes the transmission latency requirement information, the first device may complete transmission of the related information of the AI model in accordance with a latency requirement based on the transmission latency requirement information, to avoid affecting use performance of the AI model when the second device cannot use the AI model at appropriate time because the related information of the AI model transmitted by the first device times out. If the first reference information includes the transmission manner expected by the second device, the first device may determine the transmission manner of the related information of the AI model based on the expected transmission manner, so that the determined transmission manner better satisfies a transmission requirement of the second device for the AI model.

With reference to the second aspect, in some implementations of the second aspect, the method further includes: The second device receives first indication information from the first device, and obtains the transmission manner based on the first indication information.

Based on the foregoing solution, after obtaining the transmission manner, the first device may notify the second device of the transmission manner, so that the second device can know the transmission manner of the related information of the to-be-transmitted AI model, and receive the related information of the AI model in the transmission manner. For example, the related information of the AI model is transmitted in blocks. The first device notifies the second device of the block-based transmission manner, to avoid failure to assemble the complete AI model because the second device starts to assemble the AI model before all blocks of the related information of the AI model are transmitted. Therefore, this solution can improve accuracy of assembling the AI model by the second device.

With reference to the second aspect, in some implementations of the second aspect, the method further includes: The second device sends second indication information to the first device, where the second indication information indicates the transmission manner.

Based on the foregoing solution, the second device indicates, to the first device, the transmission manner determined by the second device. In other words, the first device does not need to determine the transmission manner of the related information of the AI model, to reduce execution complexity of the first device.

With reference to the second aspect, in some implementations of the second aspect, the method further includes: The second device receives second reference information from the first device, where the second reference information includes at least one of information about a second candidate AI model set or information about a candidate transmission manner. The second device determines the transmission manner based on the second reference information. The second device sends third indication information to the first device, where the third indication information indicates the transmission manner determined based on the second reference information, and the second reference information is determined based on the first reference information.

Based on the foregoing solution, the first device provides reference information for the second device to determine the transmission manner, so that the transmission manner determined by the second device better satisfies transmission requirements of the first device and the second device, to reduce impact caused by an inappropriate transmission manner on performance of using the AI model.

With reference to the second aspect, in some implementations of the second aspect, when the second reference information includes the information about the second candidate AI model set, the AI model indicated by the third indication information is determined based on the information about the second candidate AI model set; or when the second reference information includes the information about the candidate transmission manner, the transmission manner indicated by the third indication information is determined based on the information about the candidate transmission manner.

With reference to the second aspect, in some implementations of the second aspect, the transmission manner is transmitting the related information of the AI model as a whole, or transmitting the related information of the AI model in blocks.

Based on the foregoing solution, when a capacity of the AI model is small, the related information of the AI model may be transmitted as a whole. On the contrary, when a capacity of the AI model is large, the related information of the AI model may be transmitted in blocks. This solution can avoid impact on transmission of other signaling and data, for example, congestion of the other signaling and data, caused by an excessively large data amount of the related information of the AI model sent in a single transmission.

With reference to the second aspect, in some implementations of the second aspect, the transmission manner is transmitting the related information of the AI model in blocks, and the related information of the AI model includes block identifiers.

Based on the foregoing solution, in a case of block-based transmission, the second device may obtain the block identifiers. Therefore, the second device can identify related information of each block of the disassembled AI model based on the block identifiers, so that the second device can more accurately assemble the AI model.

With reference to the second aspect, in some implementations of the second aspect, the method further includes: The second device receives update information from the first device, and updates the AI model based on the update information.

Based on the foregoing solution, when the AI model needs to be updated, the first device can send the update information, so that the second device updates the AI model in a timely manner, to improve application performance of the AI model.

With reference to the second aspect, in some implementations of the second aspect, a transmission path of the related information of the AI model includes user plane transmission and/or control plane transmission.

According to a third aspect, a communication apparatus is provided. The apparatus is configured to perform the method in any one of the possible implementations of the first aspect and the second aspect. Specifically, the apparatus may include a unit and/or a module configured to perform the method in any one of the possible implementations of the first aspect and the second aspect, for example, a processing unit and/or a communication unit.

In an implementation, the apparatus is a communication device (for example, a first device or a second device). When the apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the communication device (for example, the first device or the second device). When the apparatus is the chip, the chip system, or the circuit used in the communication device, a communication unit may be an input/output interface, an interface circuit, an output circuit, an input circuit, a pin, a related circuit, or the like of the chip, the chip system, or the circuit; and the processing unit may be at least one processor, a processing circuit, a logic circuit, or the like.

According to a fourth aspect, a communication apparatus is provided. The apparatus includes at least one processor, configured to execute a computer program or instructions stored in a memory, to perform the method in any one of the possible implementations of the first aspect and the second aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a communication device (for example, a first device or a second device).

In another implementation, the apparatus is a chip, a chip system, or a circuit used in the communication device (for example, the first device or the second device).

According to a fifth aspect, a processor is provided, and is configured to perform the methods provided in the foregoing aspects.

Operations such as sending and obtaining/receiving related to the processor may be understood as operations such as output and input of the processor, or sending and receiving operations performed by a radio frequency circuit and an antenna, unless otherwise specified, or provided that the operations do not contradict actual functions or internal logic of the operations in related descriptions. This is not limited in this application.

According to a sixth aspect, a computer-readable storage medium is provided. The computer-readable medium stores program code to be executed by user equipment, and the program code includes the method in any one of the possible implementations of the first aspect and the second aspect.

According to a seventh aspect, a computer program product including instructions is provided. When the computer program product runs on a computer, the computer is enabled to perform the method in any one of the possible implementations of the first aspect and the second aspect.

According to an eighth aspect, a communication system is provided, including the first device and the second device described above.

In an implementation of the eighth aspect, the first device is an access network device, and the second device is a terminal device.

In another implementation of the eighth aspect, the first device is a terminal device, and the second device is an access network device.

### BRIEF DESCRIPTION OF DRAWINGS

FIG. 1 is a diagram of a communication system according to an embodiment of this application;
FIG. 2 is a diagram of an architecture of an access network device applicable to an embodiment of this application;
FIG. 3 is a diagram of an AI application framework according to an embodiment of this application;
FIG. 4 is a schematic flowchart of a communication method 400 according to an embodiment of this application;
FIG. 5 is a schematic flowchart of a method 500 for obtaining a transmission manner according to an embodiment of this application;
FIG. 6 is a schematic flowchart of another method 600 for obtaining a transmission manner according to an embodiment of this application;
FIG. 7 is a schematic flowchart of a communication method 700 according to an embodiment of this application;
FIG. 8 is a diagram of a structure of a communication apparatus 800 according to an embodiment of this application; and
FIG. 9 is a diagram of a structure of a communication apparatus 900 according to an embodiment of this application.

### DESCRIPTION OF EMBODIMENTS

The following describes technical solutions of embodiments in this application with reference to accompanying drawings.

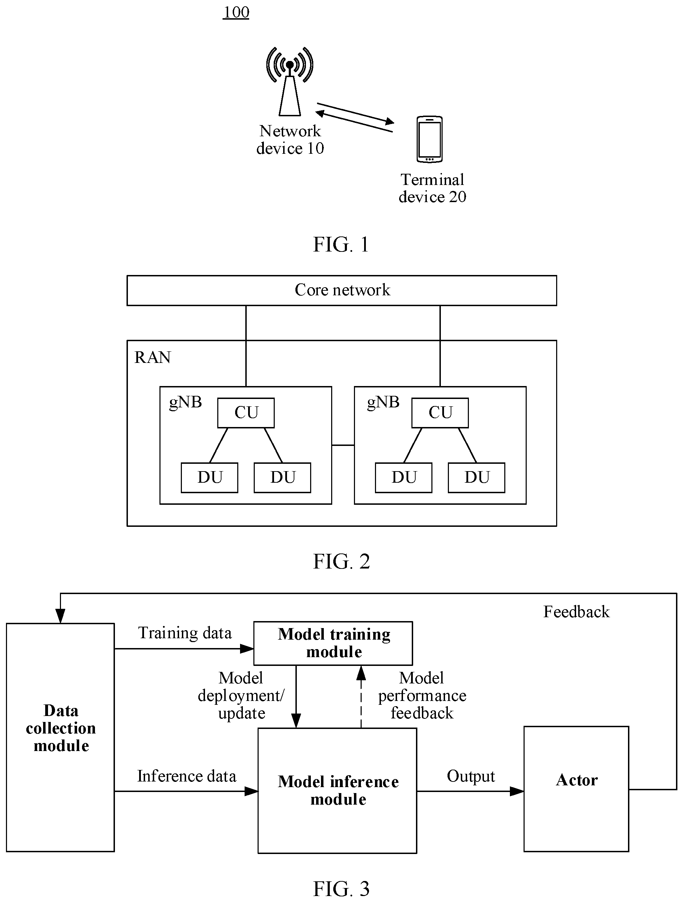

FIG. 1 is a diagram of a communication system according to an embodiment of this application.

The communication system 100 shown in FIG. 1 includes an access network device 10 and a terminal device 20. In the communication system, the terminal device 20 may send uplink data/an uplink signal/uplink information to the access network device 10, and the access network device 10 may send downlink data/a downlink signal/downlink information to the terminal device 20.

The communication method provided in this embodiment of this application may further relate to a device or a transmission node that is not shown in FIG. 1. This is not limited in embodiments of this application.

The communication system applied to embodiments of this application is merely an example for description, and the communication system applicable to embodiments of this application is not limited thereto. Any communication system that can implement functions of the foregoing devices is applicable to embodiments of this application.

The technical solutions in embodiments of this application may be applied to various communication systems, for example, a long term evolution (long term evolution, LTE) system, a long term evolution advanced (LTE advanced, LTE-A) system, an LTE frequency division duplex (frequency division duplex, FDD) system, an LTE time division duplex (time division duplex, TDD) system, a wireless fidelity (wireless fidelity, Wi-Fi) communication system, a universal mobile telecommunications system (universal mobile telecommunications system, UMTS), a worldwide interoperability for microwave access (worldwide interoperability for microwave access, WiMAX) communication system, a 5th generation (5th generation, 5G) system such as an NR system, or a future evolved communication system (for example, a 6G mobile communication system), vehicle-to-everything (vehicle-to-everything, V2X), where V2X may include vehicle-to-network (vehicle-to-network, V2N), vehicle-to-vehicle (vehicle-to-vehicle, V2V), vehicle-to-infrastructure (vehicle-to-infrastructure, V2I), vehicle-to-pedestrian (vehicle-to-pedestrian, V2P), and the like, long term evolution-vehicle (long term evolution-vehicle, LTE-V), an internet of vehicles, machine-type communication (machine-type communication, MTC), an internet of things (internet of things, IoT), long term evolution-machine (long term evolution-machine, LTE-M), machine-to-machine (machine-to-machine, M2M), and the like.

A terminal device may be a wireless terminal device that can receive scheduling and indication information of an access network device. The terminal device may be a device that provides a user with voice and/or data connectivity, a handheld device having a wireless connection function, or another processing device connected to a wireless modem.

The terminal device in embodiments of this application may also be referred to as a terminal, an access terminal, a subscriber unit, user equipment (user equipment, UE), a subscriber station, a mobile station, a remote station, a remote terminal, a mobile device, a user terminal, a wireless communication device, a user agent, or a user apparatus. The terminal device is a device that includes a wireless communication function (providing a user with voice/data connectivity), for example, a handheld device or a vehicle-mounted device having a wireless connection function. The terminal device in embodiments of this application may be a mobile phone (mobile phone), a tablet computer (pad), a computer having a wireless transceiver function, a train, an airplane, a mobile internet device (mobile internet device, MID), a virtual reality (virtual reality, VR) terminal, an augmented reality (augmented reality, AR) terminal, a wireless terminal (for example, a robot) in industrial control (industrial control), a wireless terminal (for example, a vehicle-mounted device, an entire vehicle device, a vehicle-mounted module, or a vehicle) in the internet of vehicles, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal in a 5G network or a terminal in a future evolution network, or the like. In addition, the terminal device may also be used in scenarios such as self-driving (self-driving), telemedical (telemedical), a smart grid (smart grid), transportation safety (transportation safety), smart city (smart city), a smart city (smart city), and smart home (smart home). It may be understood that all or a part of functions of the terminal device in this application may alternatively be implemented by using a software function running on hardware, or may be implemented by using an instantiated virtualisation function on a platform (for example, a cloud platform).

The access network device may be a device in a wireless network. For example, the access network device may be a device that is deployed in a radio access network and that provides a wireless communication function for the terminal device. For example, the access network device may be a radio access network (radio access network, RAN) node that connects the terminal device to the wireless network.

The access network device includes but is not limited to various types of base stations, such as a next generation NodeB (gNodeB, gNB), an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved NodeB (home evolved NodeB, HeNB, or home NodeB, HNB), may be a server, a wearable device, a vehicle-mounted device, a wireless relay node, a wireless backhaul node, a transmission point (transmission point, TP), a transmission and reception point (transmission and reception point, TRP), or the like, may be one or a group of antenna panels (including a plurality of antenna panels) of the base station, or may be a network node that constitutes the base station, for example, a baseband unit (BBU) or a distributed unit (distributed unit, DU). The base station may be a macro base station, a micro base station, a pico base station, a small cell, a relay station, a balloon station, or the like. It may be understood that all or a part of functions of the access network device in this application may alternatively be implemented by using a software function running on hardware, or may be implemented by using an instantiated virtualisation function on a platform (for example, a cloud platform).

FIG. 2 is a diagram of an architecture of an access network device applicable to an embodiment of this application.

As shown in FIG. 2, the access network device in embodiments of this application may be in a central unit (central unit, CU)-distributed unit (distributed unit, DU) separation architecture. A RAN may be connected to a core network (for example, a long term evolution (long term evolution, LTE) core network, or a 5G core network). It may be understood that the access network device is divided into the CU and the DU from the perspective of logical functions. The CU and the DU may be physically separated or deployed together. A plurality of DUs may share one CU. One DU may alternatively be connected to a plurality of CUs (not shown in FIG. 2). The CU and the DU may be connected through an interface, for example, an F1 interface. The CU and the DU may be divided based on a protocol layer of a wireless network. A possible division manner is that the CU is configured to perform functions of a radio resource control (radio resource control, RRC) layer, a service data adaptation protocol (service data adaptation protocol, SDAP) layer, and a packet data convergence protocol (packet data convergence protocol, PDCP) layer, and the DU is configured to perform functions of a radio link control (radio link control, RLC) layer, a media access control (media access control, MAC) layer, a physical (physical) layer, and the like.

It may be understood that division of processing functions of the CU and the DU based on the protocol layers is merely an example, and the CU and the DU may alternatively be divided in another manner. For example, more functions of protocol layers than those in the foregoing division manner may be divided into the CU or the DU. For example, some processing functions of protocol layer in the foregoing division manner may be further divided into the CU or the DU.

In a design, division of functions of the CU or the DU may alternatively be performed based on service types or another system requirement. For example, division is performed based on a latency. Functions whose processing time needs to satisfy a latency requirement are set in the DU for implementation, and functions that do not need to satisfy the latency requirement are set in the CU for implementation.

In another design, the CU may alternatively have one or more functions of the core network. One or more CUs may be set together or separately. For example, the CUs may be set on a network side for ease of centralized management. The DU may have a plurality of radio frequency functions, or the radio frequency functions may be set remotely.

A function of the CU may be implemented by one entity or different entities. For example, the functions of the CU may be further divided. For example, a control plane (control plane, CP) and a user plane (user plane, UP) are separated, namely, a CU-control plane (CU-CP) and a CU-user plane (CU-UP). For example, the CU-CP and the CU-UP may be implemented by different functional entities, and are connected through an E1 interface. The CU-CP and the CU-UP may be coupled to the DU, to jointly perform functions of the access network device. The CU-control plane CU-CP may be further of an architecture in which the CU-CP is further divided. To be specific, the CU-CP is further divided into a CU-CP 1 and a CU-CP 2. The CU-CP 1 includes various radio resource management functions, and the CU-CP 2 includes only an RRC function and a PDCP-C function (namely, a basic function of control plane signaling at the PDCP layer).

In different systems, the CU (including the CU-CP or the CU-UP) or the DU may also have different names, but a person skilled in the art may understand meanings thereof. For example, in an open radio access network (open radio access network, O-RAN) system, a CU may also be referred to as an O-CU (open CU), a DU may also be referred to as an O-DU, a CU-CP may also be referred to as an O-CU-CP, and a CU-UP may also be referred to as an O-CU-UP. For ease of description, the CU, the CU-CP, the CU-UP, and the DU are used as examples for description in this application.

An AI module is a module having a machine learning computing capability. In a wireless communication system, the AI module may be located in operations, administration, and maintenance (operations, administration and maintenance, OAM), or may be located in an access network device (for example, if the access network device is in a separation architecture, the AI module may be located in a CU), or may be located in a terminal device, or may be independent as a network element entity: AI control layer (AI control layer, AIC). A main function of the AI module in the wireless communication system is to perform a series of AI computing such as model building, training-based approximation, and reinforcement learning based on input data (in the wireless communication system, the input data is usually network operations data such as network load and channel quality provided by the access network device or monitored by the OAM, or a user plane data transmission status provided by a core network). A trained model provided by the AI module has a prediction function for a network change on a RAN side, and may be used for load prediction, terminal device trajectory prediction, and the like. In addition, the AI module may further perform policy inference from perspectives of network energy saving, mobility optimization, and the like based on a result of predicting RAN network performance by using the trained model, to obtain an appropriate and efficient energy saving policy, mobility optimization policy, and the like. When the AI module is located in the OAM, a current northbound interface may be reused for communication between the AI module and the network device on the RAN side. When the AI module is located in the access network device or the CU of the access network device, current F1, Xn, Uu, and other interfaces may be reused. When the AI module is independent as a network entity, communication links to the OAM, the RAN side, and the like are re-established, for example, based on a wired link or a wireless link. When the CP and the UP of the CU are separated, the CP is usually responsible for receiving the AI model and subsequent AI inference and policy generation functions. When the CU-CP is further divided into the CU-CP 1 and the CU-CP 2, the CU-CP 1 is usually responsible for receiving the AI model and a subsequent inference function of the AI model and generating specific interaction signaling, and the CU-CP 2 sends the signaling.

FIG. 3 is a diagram of an AI application framework according to an embodiment of this application.

As shown in FIG. 3, the AI application framework includes a data collection module, a model training module, a model inference module, and an actor (Actor). The model training module and the model inference module are examples of AI modules. An access network device, an access network device-CU, an access network device-DU, a terminal device, or another management entity may input data to the data collection module. The data collection module may be used as a database for AI model training and data analysis and inference. The model training module analyzes training data output by the data collection module, provides an optimal AI model, and deploys the obtained AI model to the model inference module. Based on inference data output by the data collection module, the model inference module provides reasonable prediction on network operations based on the AI model (obtained by the model training module through training), and feeds back performance data of the AI model to the model training module. Subsequently, the model training module continues to train the model based on the feedback performance data, and notifies the model inference module of an updated AI model. Alternatively, the model inference module indicates the network to perform policy adjustment based on the inference data output by the data collection module and the AI model. Related policy adjustment is uniformly planned by the actor, and is sent to a plurality of network entities for operations. In addition, after a related policy is applied, the specific network performance is fed back to the data collection module for storage.

AI applications on the RAN side include but are not limited to the following application scenarios: energy saving (energy saving), load balancing (load balancing), mobility optimization (mobility optimization), channel state information-reference signal (channel state information-reference signal, CSI-RS) feedback enhancement, beam management enhancement (beam management enhancement, BME), and positioning enhancement. The following describes the basic principles of the foregoing application scenarios.

Energy saving case: An access network device collects load, energy consumption, and energy efficiency information of the access network device and a neighbor cell, and trajectory information of a terminal device, a measurement result, and the like, predicts a load trend of the access network device, and takes appropriate energy saving measures based on cell usage, a key performance indicator (key performance indicator, KPI) requirement, and the like in a timely manner without affecting network coverage and user access.

Load balancing case: The access network device collects a load, energy consumption, and energy efficiency information of the access network device and the neighbor cell, the trajectory information of the terminal device, the measurement result, and the like, predicts the load trend of the access network device, and based on cell usage, a KPI requirement, and the like, properly selects some terminal devices to be handed over to the neighbor cell, or accepts a terminal device that is handed over from the neighbor cell to the access network device due to load balancing, so that load levels of access network devices in an entire network are close, to reduce a case in which some access network devices are overloaded and affect normal services, and resources of some access network devices are idle.

Mobility optimization case: The access network device collects historical trajectory information of the terminal device, and predicts a future trajectory of the terminal device with reference to measurement information of the terminal device. Based on the predicted trajectory, whether the terminal device is handed over to a cell is determined in advance, a handover configuration is delivered in advance, and the target cell is indicated to prepare an access resource. This reduces a latency of the terminal device in a handover procedure and a probability of a handover or access failure.

CSI-RS feedback enhancement case: A main procedure of CSI-RS feedback enhancement is as follows:
S1: The access network device first exchanges, with the terminal device, a dictionary that is usually a model trained by the access network device in advance based on a capability of the terminal device and a requirement of the access network device, and then delivers an encoder (encoder) and a quantizer (quantizer) to the terminal device.
S2: The terminal device predicts a future channel matrix based on a measured channel matrix result, compresses and quantizes a to-be-fed-back matrix and prediction result based on the existing dictionary, and transfers a compressed and quantized channel matrix result and prediction result to the access network device.
S3: The access network device reversely restores the original channel matrix based on the dictionary and the data reported by the terminal device.

Beam management enhancement case: A current main procedure of beam management enhancement is as follows:
S1: Generation of an initial model: The access network device trains a sparse scanning matrix by using results that are of full beam scanning on a synchronization signal and physical broadcast channel block (synchronization signal and physical broadcast channel block, SSB) and that are reported by a specific quantity of terminal devices. This matrix is usually unique to each cell.
S2: The access network device sends the sparse model to the terminal device, for example, sends the sparse model to the terminal device by using a system information block (system information block, SIB) message, and the terminal device performs P1-phase beam scanning based on the matrix, and sends a scanning result of the sparse model to the access network device.
S3: The access network device infers an optimal CSI-RS beam based on the scanning result of the terminal device, starts to perform P2 scanning on the terminal device, and the terminal device feeds back an optimal CSI-RS beam ID to the access network device.

Positioning accuracy enhancement case: A main procedure of positioning accuracy enhancement is as follows:
S1: A reference terminal device controlled by an operator collects raw data.
S2: A location management function (location management function, LMF) and the access network device separately train models based on the raw data. The model trained by the LMF may infer final positioning (longitude and latitude) of the terminal device. The model trained by the access network device may infer a line-of-sight (line-of-sight, LOS)/non-line-of-sight (non-line-of-sight, NLOS) determining result.

In the foregoing application scenarios, some AI functions may be implemented on a terminal device side, but a manner of transmitting related information of the AI model to the terminal device over an air interface is not specified. For example, in the CSI-RS feedback enhancement case, the access network device delivers related data of the AI model to the terminal device, so that the terminal device implements a specific AI function. In addition, a single AI model transmission manner cannot satisfy different AI model transmission requirements in different cases. In addition, in a transmission solution of the related information of the AI model, specific related information of the to-be-transmitted AI model and a format in which the related information of the AI model is transmitted need to be considered.

Embodiments of this application provide a communication method and apparatus, to obtain an appropriate transmission manner for transmitting related information of an AI model, so as to satisfy transmission requirements of the AI model in different application scenarios.

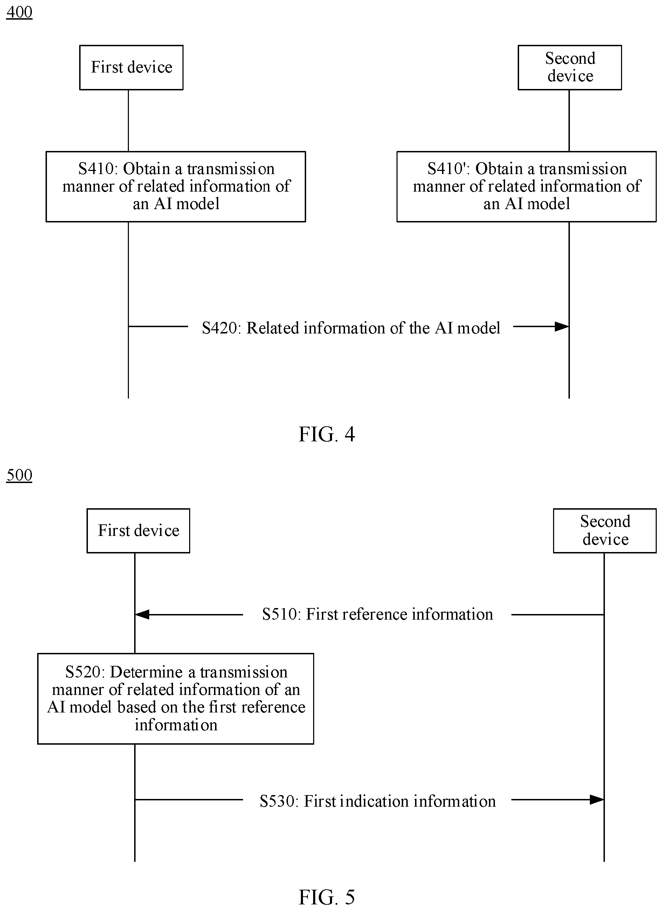

FIG. 4 is a schematic flowchart of a communication method 400 according to an embodiment of this application. The method 400 is applied to a first device and a second device. The first device is an access network device, and the second device is a terminal device; or the first device is a terminal device, and the second device is an access network device. The method 400 includes the following steps.

S410: The first device obtains a transmission manner of related information of an AI model.

For example, the first device determines the related information of the to-be-sent AI model and the transmission manner of the related information of the AI model. The related information of the AI model may be one or more of body data of the AI model, structure information of the AI model, or parameter information of the AI model. Alternatively, the related information of the AI model may be other information of the AI model. All information that can enable the second device to restore the AI model falls within a protection scope of the related information provided in this embodiment of this application.

The body data of the AI model may be understood as data constituting the AI model, or data corresponding to the AI model, or the AI model.

For example, a structure of the AI model may include a fully-connected structure, a neural network structure, and the like.

For example, when the related information of the AI model includes the body data of the AI model, that is, the first device does not disassemble the structure and parameters of the AI model when transmitting the AI model, the second device may directly restore the AI model based on the body data of the AI model after receiving the body data of the AI model.

For example, the structure information and the parameter information of the AI model are obtained by disassembling the AI model. For example, for a fully-connected AI model, a structure (structure) may be a quantity of layers (layer) of the AI model, a quantity of nodes (node) at each layer, and whether the nodes are connected. A parameter (parameter) may be an actual weighted parameter of every two connected nodes, and the actual weighted parameter is usually represented by a floating-point number. When the related information of the AI model includes the parameter information or the structure information of the AI model, after receiving all structure information and parameter information of the AI model, the second device restores the AI model with reference to the structure information and the parameter information. In a possible implementation, the transmission manner is transmitting the related information of the AI model as a whole.

That the related information of the AI model is transmitted as a whole may be understood as: The related information of the AI model is transmitted as a whole, that is, the related information of the AI model is transmitted through one piece of signaling/message. When the related information of the AI model is transmitted as a whole, the related information of the AI model may be transmitted through a piece of user plane signaling/message, or may be transmitted through a piece of control plane signaling/message. This is not limited in this embodiment of this application.

In another possible implementation, the transmission manner is transmitting the related information of the AI model in blocks.

That the related information of the AI model is transmitted in blocks may be understood as: The related information of the AI model is divided into N parts, and is separately transmitted through M pieces of signaling/messages, where N is greater than 1, and M is greater than or equal to 1. For example, the N parts may be separately transmitted through N pieces of signaling/messages; or when N is greater than or equal to 3, two or more of the N parts may be transmitted in one piece of signaling/message. In addition, any one of the N parts may also be transmitted through a plurality of pieces of signaling/messages. When the related information of the AI model is transmitted in blocks, each disassembled part may be transmitted through a piece of user plane signaling/message, or may be transmitted through a piece of control plane signaling/message, or one part is transmitted through a piece of user plane signaling/message, and another part is transmitted through a piece of control plane signaling/message. This is not limited in this embodiment of this application.

In this application, block-based transmission may also be referred to as disassembled transmission, segmented transmission, or fragmented transmission, and the block-based transmission is used throughout the following descriptions.

S410': The second device obtains the transmission manner of the related information of the AI model.

For example, the transmission manner obtained by the second device may be determined by the second device. In this case, the second device indicates the transmission manner to the first device. Alternatively, the transmission manner obtained by the second device may be determined and indicated by the first device to the second device.

In other words, the transmission manner obtained by the second device is the same as the transmission manner obtained by the first device. For specific content of the transmission manner, refer to related descriptions in S410. Details are not described herein again.

It may be understood that S410 may be performed before S410', or may be performed after S410', or may be performed simultaneously with S410'. This is not limited in this application.

S420: The first device sends the related information of the AI model to the second device according to the obtained transmission manner. Correspondingly, the second device receives the related information of the AI model from the second device according to the obtained transmission manner.

In a possible implementation, when the related information of the AI model is transmitted in blocks, in addition to one or more of the body data of the AI model, the structure information of the AI model, or the parameter information of the AI model, the related information of the AI model further includes block identifiers.

It may be understood that after receiving the block identifiers, the second device may determine, based on the block identifiers, whether the related information of the AI model is completely received, or may determine an identifier of related information of each part of the disassembled AI model, so that the second device can accurately assemble the AI model.

For example, the related information of the AI model is the structure information and the parameter information. The structure information is transmitted as a whole, and the parameter information is divided into three blocks for transmission based on a sequence of nodes and a quantity of nodes: a block #1, a block #2, and a block #3. In a transmission process, block identifiers #1, #2, and #3 are also transmitted together with the parameter information. In this way, after receiving the structure information, the block #1, the block #2, and the block #3, the second device may determine, based on the block identifiers, a node that is in the AI model structure and to which parameter information of each block corresponds as an actual weighted parameter, to assemble the AI model.

For example, the first device is an access network device, and the second device is a terminal device. If a part or all of the related information of the AI model is transmitted through a piece of user plane signaling/message, the access network device performs data radio bearer (data radio bearer, DRB) configuration for the terminal device. The configuration indicates, to the terminal device, DRB identification information and a PDCP frame number that are used by the access network device to transmit the related information of the AI model. Specifically, the DRB identification information that is configured by the access network device for the terminal device and that is used to transmit the related information of the AI model is DRB#1, and the PDCP frame number is PDCP#1 and PDCP#2. The access network device may add the related information of the to-be-transmitted AI model to the PDCP#1 and the PDCP#2 corresponding to the configured DRB#1, for example, related information of the entire AI model, or related information of the AI model in blocks and the block identifiers.

If a part or all of the related information of the AI model is transmitted through a control plane, similarly to the DRB configuration, the access network device performs signaling radio bearer (signaling radio bearer, SRB) configuration for the terminal device. The configuration indicates, to the terminal device, SRB identification information and a PDCP frame number that are used by the access network device to transmit the related information of the AI model. Specifically, the SRB identification information that is configured by the access network device for the terminal device and that is used to transmit the related information of the AI model is SRB#1, and the PDCP frame number is PDCP#3 and PDCP#4. The access network device may add the related information of the to-be-transmitted AI model to the PDCP#3 and the PDCP#4 corresponding to the configured SRB#1. Optionally, the access network device configures, for the terminal device through RRC signaling, an SRB that carries the related information of the AI model. In addition, the RRC signaling may further include a control plane block identifier, and the control plane block identifier is different from the block identifier of the related information of the AI model. For example, in a process of transmitting the related information of the AI model in blocks, it is found that a data amount of a block is large when the block is transmitted through control plane signaling. Therefore, the control plane signaling is transmitted in blocks. A control plane block identifier is a block identifier of the control plane signaling.

For example, the first device is a terminal device, and the second device is an access network device. If a part or all of the related information of the AI model is transmitted through a user plane, the terminal device may perform DRB configuration for the terminal device based on a quality of service (quality of service, QoS) parameter, and indicate, to the access network device, DRB identification information and a PDCP frame number that are used by the terminal device to transmit the related information of the AI model. If a part or all of the related information of the AI model is transmitted through a control plane, the terminal device may indicate, to the access network device during uplink SRB configuration, SRB identification information and a PDCP frame number that are used by the terminal device to transmit the related information of the AI model. Specifically, the terminal device adds the related information of the to-be-transmitted AI model to a configured PDCP frame corresponding to the PDCP frame number. Optionally, the terminal device indicates, to the access network device through RRC signaling, an SRB that carries the related information of the AI model. In addition, the RRC signaling may further include a control plane block identifier, and the control plane block identifier is different from the block identifier of the related information of the AI model.

Based on the solution provided in the method 400, the first device can obtain an appropriate transmission manner for transmitting the related information of the AI model to the second device, to satisfy transmission requirements of the AI model in different application scenarios.

The following describes, by using the method 500 and the method 600, different procedures in which the first device and the second device separately obtain the transmission manner of the related information of the AI model in S410 and S410'. It may be understood that the methods 500 and 600 are further descriptions for the method 400, and content described in the foregoing method 400 may be used for the methods 500 and 600.

FIG. 5 is a schematic flowchart of a method 500 for obtaining a transmission manner according to an embodiment of this application. The method 500 includes the following steps.

S510: A second device sends first reference information to a first device. Correspondingly, the first device receives the first reference information from the second device.

For example, if the second device is a gNB, and the first device is a terminal device, a generation module of the first reference information may be located in the gNB, a gNB-CU, a gNB-CU-CP, or a gNB-CU-CP 1. When the generation module is located in the gNB-CU-CP 1, a gNB-CU-CP 2 is responsible for sending, to the terminal device, the first reference information generated by the gNB-CU-CP 1.

For example, the second device may send the first reference information to the first device based on a case in which an AI model needs to be used for optimization currently and a capability of the second device.

In a possible implementation, the first reference information includes at least one of the following: information about a first candidate AI model set expected by the second device, buffering capability information of the second device, transmission latency requirement information, or information about a transmission manner expected by the second device. When the first reference information includes the information about the first candidate AI model set, an AI model determined by the first device belongs to the first candidate AI model set.

When the first reference information includes the transmission latency requirement information, the first device may subsequently transmit, based on the transmission latency requirement information, the related information of the AI model determined by the first device. When the first reference information includes the transmission latency requirement information and the information about the first candidate AI model set, the transmission latency requirement information may be transmission latency requirement information corresponding to an AI model in the first candidate AI model set.

For an application scenario of beam management enhancement (beam management enhance, BME), an example of the first reference information is shown in Table 1. It may be understood that Table 1 is merely an example, and this application is not limited thereto. Table 1 may have other changes, or the first reference information includes only some content in the example of Table 1, or the first reference information may further include other content other than that in Table 1. This is not limited in this embodiment of this application.

**Table 1**

| Case (Case) | Buffering capability information | Transmission latency requirement information | Information about an expected transmission manner | Information about an expected transmission path | Information about the first candidate model set |
|---|---|---|---|---|---|
| BME case 1 | X megabytes (MB) | ≤A milliseconds (ms) | In blocks | CP | AI model #1 |
| | | | | | AI model #2 |
| BME case 2 | Y MB | ≤ B ms | As a whole | UP | AI model #3 |
| | | | | | AI model #4 |

It should be noted that the information of the first reference information in Table 1 may be specific parameter values, or may be code values agreed upon by the first device and the second device in advance. Content and representation manners of the first reference information are not limited in this embodiment of this application.

A "case" in Table 1 indicates a specific case in which the second device expects to use the AI model for optimization, and the case corresponds to a set of transmission parameters. The following uses the BME case 1 as an example to describe meaning of each piece of reference information.

Buffering capability information: A buffering capability indicated by the buffering capability information may be a maximum capacity that can be used by the second device to store the AI model, for example, X MB=500 MB. Alternatively, the buffering capability may be a maximum transmission capacity of the related information of the AI model that can be received and stored by the second device in a unit time. For example, the second device receives a maximum of X MB=100 MB related information of the AI model per second.

Transmission latency requirement information: A transmission latency requirement indicated by the transmission latency requirement information may be a transmission latency requirement of related information of an AI model that is determined by the second device based on a target application scenario. For example, the BME case 1 requires a transmission latency of no more than A ms. Generally, a transmission latency is determined with reference to a specific application scenario, an actual channel environment, and the like. The transmission latency requirement may be indicated by a QoS parameter. For example, the second device may indicate, to the second device, a QoS flow identifier (QoS flow identifier, QFI) corresponding to related information of an expected transmitted AI model, a corresponding QoS parameter, and the like.

Information about the first candidate AI model set: for the BME case 1, information about a set of AI models that the second device expects the first device to transmit, or information about a set of AI models recommended by the second device. The information about the first candidate AI model set is, for example, a set of identification information of AI models, or a set of index information of AI models agreed upon by the first device and the second device, or a set of functions (function) implemented based on an AI model, or a set of number information of functions. This is not limited in this embodiment of this application. For example, in Table 1, information about a set of AI models expected by the second device in the BME case 1 is represented as {AI model #1, AI model #2}, and information about a set of AI models expected by the second device in the BME case 2 is represented as {AI model #3, AI model #4}.

Information about the expected transmission manner: For the BME case 1, the second device expects the first device to transmit the related information of the AI model in blocks. For the BME case 2, the second device expects the first device to transmit the related information of the AI model as a whole.

Information about the expected transmission path: a transmission path, on an air interface, of the related information of the AI model expected by the second device. "CP" indicates transmission through signaling or a message of a control plane (control plane, CP), and "UP" indicates transmission through signaling or a message of a user plane (user plane, CP). If the first reference information does not include the information about the expected transmission path, after determining that the related information of the AI model needs to be transmitted as a whole or in blocks, the first device may independently select a transmission path.

In a possible implementation, the first device may determine the transmission path with reference to characteristics of control plane transmission, user plane transmission, and the AI model, or the second device may determine the expected transmission path with reference to characteristics of control plane transmission, user plane transmission, and the AI model. Specifically, a priority of control plane signaling is usually high, and therefore, a transmission priority is also high, but control plane transmission is affected by a cell handover. When the control plane signaling is used to transmit information with a large data amount, the control plane signaling may be transmitted in blocks. When a quantity of blocks is large, control plane resources are continuously occupied. In addition, in some communication cases, a group of control plane signaling is required to be continuously sent. A large quantity of control plane signaling blocks may affect normal transmission of other control plane signaling. User plane transmission is not affected by a cell handover, and supports large-capacity data transmission. However, user plane transmission is combined with different QoS requirements, and therefore, the first device cannot ensure a transmission latency. In conclusion, control plane transmission is applicable to an AI model with a low transmission latency requirement and a small data amount, and user plane transmission is applicable to an AI model with a large data amount but a low latency requirement. In addition, when a transmission latency requirement is high, whether to select user plane transmission or control plane transmission needs to be determined based on a characteristic of an AI model. For example, if the AI model is large, user plane transmission is selected; if the AI model is small, control plane transmission is selected. A low transmission latency requirement may be understood as a long required transmission latency, and a high transmission latency requirement may be understood as a short required transmission latency.

For example, the first device is an access network device, and the second device is a terminal device. For the BME case 1, the terminal device may determine an expected transmission path based on capacities of the AI model #1 and the AI model #2, a current air interface resource, a service load, a mobility state of the terminal device, and the like. If the capacities of the AI model #1 and the AI model #2 are small, the terminal device has a high data service load, and the terminal device is unlikely to perform a cell handover in the short term, the terminal device expects the access network device to perform transmission through the control plane. For another example, if the capacities of the AI model #1 and the AI model #2 are large, the terminal device has a low data service load, and the terminal device is in a moving state and is likely to perform a cell handover in the short term, the terminal device expects the access network device to perform transmission through the user plane.

For example, the first device is a terminal device, and the second device is an access network device. For the BME case 1, the access network device may perform comprehensive determining based on capacities of the AI model #1 and the AI model #2, current air interface resources, a service load, collected mobility state information of the terminal device, and the like, to determine an expected transmission path. For example, if the capacities of the AI model #1 and the AI model #2 are small, the access network device has a high data service load, and the terminal device is unlikely to perform a cell handover in the short term, the access network device expects the terminal device to perform transmission through the control plane. For another example, if the capacities of the AI model #1 and the AI model #2 are large, the access network device has a low data service load, and the terminal device is in a moving state, and is likely to perform a cell handover in the short term, the access network device expects the terminal device to perform transmission through the user plane.

In addition, from a perspective of block partitioning of the AI model, a structure (structure) and a specific parameter (parameter) of the AI model may be further distinguished. For example, for a fully-connected AI model, the structure may be a specific quantity of layers (layer) of the model, a quantity of nodes (node) at each layer, and whether the nodes are connected. The specific parameter may be an actual weighted parameter (usually represented by a floating-point number) between every two connected nodes. It can be learned that a capacity of structure information of the AI model is far less than a capacity of parameter information of the AI model. Therefore, the second device may determine that the structure information and the parameter information of the AI model are transmitted according to different methods. For example, the structure information of the AI model is transmitted through the control plane, and the parameter information of the AI model is transmitted through the user plane.

S520: The first device determines a transmission manner of the related information of the AI model based on the first reference information.

It may be understood that a process in which the first device determines the related information of the AI model and the corresponding transmission manner based on the first reference information is implemented inside the first device.

For example, when the first reference information includes the information about the first candidate AI model set, the first device may determine the to-be-transmitted AI model based on the information about the first candidate AI model set, where the to-be-transmitted AI model is an AI model in the first candidate AI model set; and further determine the related information of the to-be-transmitted AI model. When the first reference information does not include the information about the first candidate AI model set, the first device may determine the to-be-transmitted AI model based on a current application scenario, a state of the first device, and other information included in the first reference information.

For example, when the first reference information includes the buffering capability information of the second device, the first device may determine the related information of the to-be-transmitted AI model based on the buffering capability information. For example, the buffering capability information indicates that the buffering capability of the second device is low, for example, 50 MB. The first device determines that the related information of the to-be-transmitted AI model is the structure information and the parameter information of the AI model. The structure information may be transmitted as a whole. A transmission path of the structure information may be control plane transmission, or may be user plane transmission. The parameter information may be transmitted in blocks. A transmission path of the parameter information may be preferentially selected as user plane transmission. This is not limited in this application. Alternatively, when the buffering capability information indicates that the buffering capability of the second device is high, for example, 500 MB, the first device determines that the related information of the to-be-transmitted AI model is body data of the AI model, and the body data may be divided into blocks. Because a data amount of the body data is large, a transmission path of the body data may be preferentially selected as user plane transmission. When the first reference information does not include the buffering capability information of the second device, the first device may determine the related information of the to-be-transmitted AI model and the transmission manner based on an actual load of the first device, an air interface condition, and other information included in the first reference information. For example, when the first reference information includes the transmission latency requirement information, the transmission latency requirement information indicates that a transmission latency requirement is low, and an air interface load is high, the first device may select an AI model with a small data amount, and transmit related information of the AI model as a whole.

For example, when the first reference information includes the transmission latency requirement information of the AI model in the first candidate AI model set, the first device may determine the transmission manner of the related information of the to-be-transmitted AI model based on the transmission latency requirement information. For example, the transmission latency requirement information indicates a low transmission latency requirement, and a data amount of the related information of the AI model is small. The first device determines to transmit the related information of the AI model as a whole, and the first device may preferentially select a transmission path as control plane transmission. Alternatively, the transmission latency requirement information indicates a high transmission latency requirement, and a data amount of the related information of the AI model is large. The first device determines to transmit the related information of the AI model in blocks, and the first device may preferentially select a transmission path as user plane transmission. This is not limited in this embodiment of this application. When the first reference information does not include the transmission latency requirement information of the second device, the first device may determine the related information of the to-be-transmitted AI model and the transmission manner based on an actual load of the first device, an air interface condition, and other information included in the first reference information.

For example, when the first reference information includes the information about the transmission manner expected by the second device, the first device may determine, based on the information about the expected transmission manner, the transmission manner of the related information of the to-be-transmitted AI model. For example, when the second device expects block-based transmission, the first device may determine that the transmission manner of the related information of the AI model is block-based transmission. When the second device expects transmission as a whole, the first device may determine that the transmission manner of the related information of the AI model is transmission as a whole. When the first reference information does not include the information about the expected transmission manner, the first device may determine the related information of the to-be-transmitted AI model and the transmission manner based on an actual load of the first device, an air interface condition, and other information included in the first reference information.

It may be understood that when the first reference information includes two or more of the information about the first candidate AI model set expected by the second device, the buffering capability information of the second device, the transmission latency requirement information, or the information about the transmission manner expected by the second device, for a method for determining, by the first device, the related information of the AI model and the transmission manner of the related information of the AI model based on the first reference information, refer to the method for determining, by the first device, the related information of the AI model and the transmission manner when the first reference information includes one piece of the foregoing information.

For example, when the first reference information includes the buffering capability information of the second device and the transmission latency requirement information, the first device may determine the related information of the to-be-transmitted AI model based on the buffering capability information. For example, the buffering capability information indicates a low buffering capability of the second device, and the first device determines that the to-be-transmitted AI model is an AI model with a small capacity, determines that the related information of the AI model is the structure information and the parameter information, and may transmit the structure information and the parameter information as a whole. Further, the first device may determine a transmission path based on the transmission latency requirement information. If the transmission latency requirement information indicates a low transmission latency requirement, the first device may preferentially select the transmission path as control plane transmission. For example, the buffering capability information indicates a high buffering capability of the second device, and the first device determines that the to-be-transmitted AI model is an AI model with a large capacity, determines that the related information of the AI model is the structure information and the parameter information, transmits the structure information as a whole, and transmits the parameter information in blocks. Further, the first device may determine a transmission path based on the transmission latency requirement information. If the transmission latency requirement information indicates a high transmission latency requirement, the first device may preferentially select the transmission path as user plane transmission.

For example, if the first device is a gNB, and the second device is a terminal device, a module used by the first device to determine the transmission manner of the related information of the AI model may be located in the gNB, a gNB-CU, a gNB-CU-CP, or a gNB-CU-CP 1. When the module is located in the gNB-CU-CP 1, a gNB-CU-CP 2 is responsible for delivering, to the terminal device, the transmission manner determined by the gNB-CU-CP 1 or signaling (for example, first indication information) related to the transmission manner.

S530: The first device sends the first indication information to the second device, where the first indication information indicates the transmission manner of the related information of the AI model. Correspondingly, the second device receives the first indication information from the first device, and obtains the transmission manner of the related information of the AI model based on the first indication information.

An example of the first indication information is shown in Table 2. It may be understood that Table 2 is merely an example, and this application is not limited thereto. Table 2 may have other changes, or the first indication information includes only some content in the example of Table 2, or the first indication information may further include other content other than that in Table 2. This is not limited in this embodiment of this application.

**Table 2**

| Case | AI model index | Block partitioning indication | Block partitioning information | Block sending method | Block partitioning basis |
|---|---|---|---|---|---|
| BME case 1 | AI model #1 + Format (optional) | Yes | 1-X MB | 1-1-CP | 1 (structure) |
| | | | 2-Y MB | 2-2-UP | 2 (parameter) |
| | | | 3-Z MB | 3-2-UP | 3 (index information) |
| | | | | | 4 (transmission path) |

It should be noted that, some information of the first indication information in Table 1 may be specific parameter values, or may be code values agreed upon by the first device and the second device in advance. Content and representation manners of the first indication information are not limited in this embodiment of this application.

A "case" in Table 2 indicates a specific case in which the AI model determined by the first device is used for optimization, and the case corresponds to a set of transmission parameters. The BME case 1 is used as an example to describe content included in the first indication information and meanings of the content.

The first indication information includes AI model index information. The AI model index may be an identifier of the AI model, or an index number agreed upon by the first device and the second device in advance, or a function (function) implemented based on the AI model, or number information of a function. This is not limited in this embodiment of this application.

Optionally, the first indication information further includes format (format) indication information, and the format indication information indicates a specific format of the related information of the AI model that is to be transmitted by the first device to the second device. The format of the related information of the AI model may be, for example, directly executable binary code, or may be a format defined by different platforms such as TensFlow and Pycharm, or may be an open-source model format such as open neural network exchange (open neural network exchange, ONNX). This is not limited in this embodiment of this application.

The first indication information includes block partitioning indication information, and the block partitioning indication information indicates, to the second device, whether the related information of the to-be-transmitted AI model is partitioned into blocks. For example, if the related information of the AI model is partitioned into blocks, the block partitioning indication information is yes/Y (Yes)/T (True); or if the related information of the AI model is not partitioned into blocks, the block partitioning indication information is no/N (No)/F (False).

The first indication information includes the block partitioning information, and the block partitioning information indicates a quantity of blocks into which the related information of the AI model is partitioned, and an identifier and a data amount of each block. As shown in Table 3, the related information of the AI model is partitioned into three blocks. "1-X MB" indicates that a data amount of a first block is X MB, "2-Y MB" indicates that a data amount of a second block is Y MB, and "3-Z MB" indicates that a data amount of a third block is Z MB.

The first indication information includes block sending method information, and the block sending method information indicates a sending method of each block after the related information of the AI model is partitioned into blocks. For example, in the block sending method information, the first number indicates a block identifier, and the second number indicates a block partitioning basis. To be specific, in "1-1-CP", the first "1" indicates a block 1, and the second "1" indicates that a block partitioning basis is structure. In other words, the block 1 is sent through the control plane, and a part that is of the related information of the AI model and that corresponds to the block 1 is the structure information. By analogy, "2-2-UP" indicates that a block partitioning basis of a block 2 is parameter, the block 2 is sent through the user plane, and a part that is of the related information of the AI model and that corresponds to the block 2 is the parameter information. "3-2-UP" indicates that a block partitioning basis of a block 3 is parameter, the block 3 is sent through the user plane, and a part that is of the related information of the AI model and that corresponds to the block 3 is the parameter information.

The first indication information includes the block partitioning basis information, and the related information of the AI model may be partitioned into blocks based on the structure and the parameter. That is, the structure information and the parameter information are separately transmitted in different blocks. Alternatively, the related information of the AI model may be partitioned into blocks based on index information. For example, an AI model is disassembled based on one or more AI functions that can be implemented by the AI model. A block 1 corresponds to a function 1, and a block 2 corresponds to a function 2. Alternatively, the related information of the AI model may be partitioned into blocks based on transmission paths. For example, a block 1 is transmitted through the user plane, and a block 2 is transmitted through the control plane. As shown in Table 3, the block partitioning basis information "1" indicates that a block partitioning basis is "structure", the block partitioning basis information "2" indicates that a block partitioning basis is "parameter", the block partitioning basis information "3" indicates that a block partitioning basis is "index information", and the block partitioning basis information "4" indicates that a block partitioning basis is "transmission path".

It may be understood that the block partitioning information and the block sending method information are examples of content included in the first indication information when the related information of the AI model is transmitted in blocks. If the related information of the AI model is transmitted as a whole, the first indication information may not include the block partitioning information and the block partitioning basis information. The block partitioning indication information indicates, for example, no/N(No)/F(False). The block sending method information may be replaced with whole-sending path information. For example, the whole-sending path information is represented as "UP/CP".

In a possible implementation, the first device sends RRC configuration information or a MAC control element (MAC control element, MAC CE) to the second device. The RRC configuration information or the MAC CE includes the first indication information. Correspondingly, the second device receives the RRC configuration information or the MAC CE from the first device.

Based on the solution provided in the method 500, the first device may determine more appropriate related information of the AI model and the transmission manner with reference to one or more of an actual load of the first device, an air interface condition, and the first reference information, to reduce impact caused by an inappropriate transmission manner on subsequent use performance of the AI model.

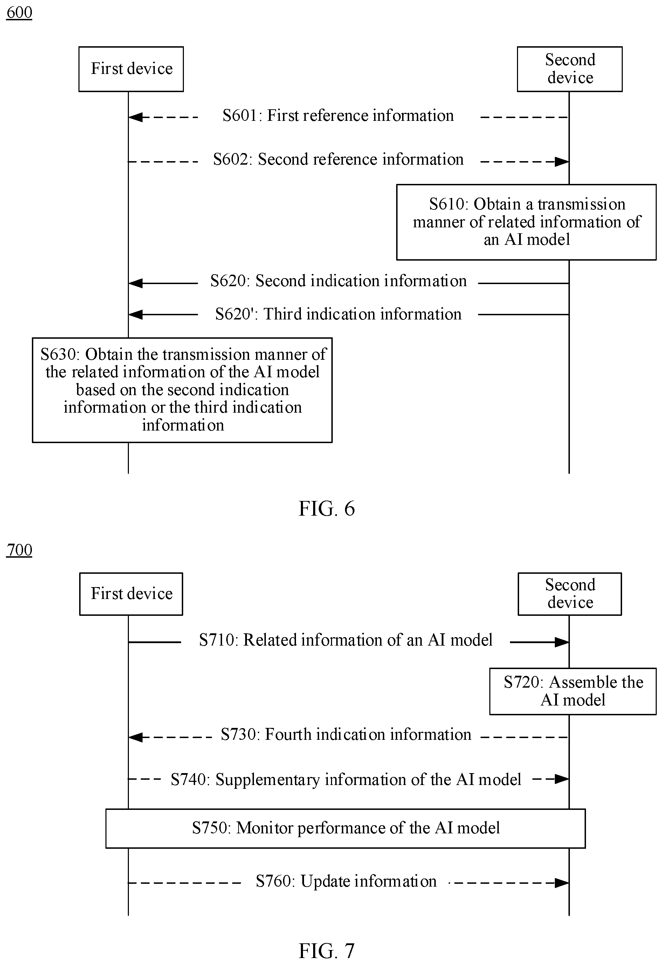

FIG. 6 is a schematic flowchart of another method 600 for obtaining a transmission manner according to an embodiment of this application. The method 600 includes the following steps.

S610: A second device obtains a transmission manner of related information of an AI model.

Implementation #1: The second device determines the transmission manner of the related information of the AI model based on information about the second device.

For example, the second device may determine the transmission manner of the related information of the AI model based on at least one of information about a first candidate AI model set expected by the second device, buffering capability information of the second device, and transmission latency requirement information.

For a specific determining method, refer to the descriptions of the related content in S520. Details are not described herein again.

S620: The second device sends second indication information to the first device, where the second indication information indicates the transmission manner of the related information of the AI model. Correspondingly, the first device receives the second indication information from the second device.

For example, for the second indication information, refer to the first indication information shown in Table 2.

Implementation #2: The second device determines the transmission manner of the related information of the final AI model based on second reference information.

Optionally, in an implementation, before S610, the method 600 further includes the following step:
S601: The second device sends first reference information to the first device. Correspondingly, the first device receives the first reference information from the second device.

For specific content of the first reference information, refer to the descriptions of the related content in S510. Details are not described herein again.

Optionally, in an implementation, before S610, the method 600 further includes the following step:
S602: The first device sends the second reference information to the second device, where the second reference information includes at least one of information about a second candidate AI model set or information about a candidate transmission manner. Correspondingly, the second device receives the second reference information from the first device.

For example, the first device may determine the second reference information based on a status of the first device, for example, at least one of a candidate AI model set that can be provided by the first device, a transmission latency requirement of an AI model in the candidate AI model set, load information of the first device, and an air interface condition.

It may be understood that, when the method 600 includes S601 and S602, if the first reference information includes the information about the first candidate AI model set, the second candidate AI model set belongs to the first candidate AI model set. When the second reference information includes the information about the second candidate AI model set, the finally determined AI model belongs to the second candidate AI model set. The AI model obtained in S610 is the AI model obtained in S410 or S410'.

For example, the first device may determine the second reference information based on the status of the first device and the first reference information obtained from the second device.

It may be understood that for an implementation of determining the second reference information by the first device, refer to the manner in which the first device determines the transmission manner of the related information of the AI model based on the first reference information in S520. A difference lies in that the final to-be-transmitted AI model and the transmission manner of the related information of the AI model are determined in S520, and one or more candidate solutions included in the second reference information in S602 can be used by the second device to determine the related information of the final AI model and the corresponding transmission manner.

An example of the second reference information is shown in Table 3. It may be understood that Table 3 is merely an example, and this application is not limited thereto. Table 3 may have other changes, or the second reference information includes only some content in the example of Table 3, or the second reference information may further include other content other than that in Table 3. This is not limited in this embodiment of this application.

**Table 3**

| Candidate number | Case | AI model index | Block partitioning indication | Block partitioning information | Block sending method | Block partitioning basis |
|---|---|---|---|---|---|---|
| 1 | BME case 1 | AI model #1 | Yes | 1-X MB | 1-1-CP | 1 (structure) |
| | | | | 2-Y MB | 2-2-UP | 2 (parameter) |
| | | + Format (optional) | | 3-Z MB | 3-2-UP | |
| 2 | BME case 1 | AI model #1 + Format (optional) | Yes | 1-X1 MB | 1-1-CP | 1 (structure) |
| | | | | 2-Y1 MB | 2-2-UP | 2 (parameter) |

It should be noted that for specific content of the second reference information shown in Table 3, refer to related descriptions in Table 2. Details are not described herein again. A difference lies in that when the second reference information includes a plurality of candidate solutions, the second reference information further includes a candidate number, so that the second device can feed back the candidate number after determining the transmission manner of the related information of the AI model.

In an implementation, if the second device obtains the second reference information from the first device, for example, performs step S602, the second device may determine the transmission manner of the related information of the final AI model based on the second reference information.

For example, when the second reference information includes the information about the second candidate AI model set, the second device determines the AI model based on the information about the second candidate AI model set; or when the second reference information includes the information about the candidate transmission manner, the second device determines the transmission manner of the related information of the AI model based on the information about the candidate transmission manner.

For example, the second device may select one of one or more candidate solutions included in the second reference information as a final transmission solution.

If the second device is a gNB, and the first device is a terminal device, a module used by the second device to determine the transmission manner of the related information of the AI model may be located in the gNB, a gNB-CU, a gNB-CU-CP, or a gNB-CU-CP 1. When the module is located in the gNB-CU-CP 1, a gNB-CU-CP 2 is responsible for sending, to the terminal device, the transmission manner determined by the gNB-CU-CP 1 or signaling (for example, the second indication information) related to the transmission manner.

Optionally, in an implementation, S620 may be replaced with S620'. Specifically, S620' includes: The second device sends third indication information to the first device, where the third indication information indicates the transmission manner of the related information of the AI model; and correspondingly, the first device receives the third indication information from the second device, where the third indication information indicates the transmission manner determined based on the second reference information, and the second reference information is determined based on the first reference information.

For example, when the method 600 includes S602, the third indication information may be a candidate number in the second reference information that is fed back.

S630: The first device obtains the transmission manner of the related information of the AI model based on the second indication information or the third indication information.

It may be understood that S620 and S620' are similar procedures in different implementations, and one of S620 and S620' is selected for performing. An implementation of the method 600 includes, for example, S610, S620, and S630, or includes S602, S610, S620', and S630, or includes S601, S602, S610, S620', and S630.

Based on the solution provided in the method 600, through interaction between the first device and the second device, the second device can determine a more appropriate AI model and a transmission manner of related information of the AI model by comprehensively considering factors such as actual loads of the first device and the second device, an air interface condition, and a transmission requirement of the AI model, to reduce impact caused by an inappropriate transmission manner on subsequent use performance of the AI model. In addition, the transmission manner obtained by the first device may be indicated by the second device. In other words, the first device does not need to determine the transmission manner of the related information of the AI model, to reduce execution complexity of the first device.

The following describes, by using the method 700, operations separately performed by the second device and the first device after the second device receives the related information of the AI model, for example, after step S420 in the method 400 is performed. It may be understood that the content described in the methods 400, 500, and 600 may be used in the method 700.

FIG. 7 is a schematic flowchart of a communication method 700 according to an embodiment of this application. The method 700 includes the following steps.

S710: A first device sends related information of an AI model to a second device. Correspondingly, the second device receives the related information of the AI model from the first device.

For details, refer to related descriptions in S420. Details are not described herein again.

S720: The second device assembles the AI model based on the related information of the AI model.

For example, the second device reassembles the received related information of the AI model into the complete AI model.

Optionally, the method 700 further includes S730 and S740.

S730: The second device sends fourth indication information to the first device, where the fourth indication information indicates related information that is missing when the second device assembles the AI model. Correspondingly, the first device receives the fourth indication information from the second device.

For example, in a process in which the second device assembles the AI model, if duplicate related information of the AI model exists, the second device may delete redundant related information and then assemble the AI model. If the AI model cannot be assembled due to a transmission error occurs or missing of the related information of the AI model, the fourth indication information may be sent to indicate, to the second device, content that is incorrectly transmitted or missing content (for example, a block identifier).

S740: The first device sends supplementary information of the AI model to the second device, where the supplementary information of the AI model is used to supplement content missing in the related information of the AI model received by the second device. Correspondingly, the second device receives the supplementary information of the AI model from the first device.

For example, the supplementary information of the AI model may be a part that is of the related information of the AI model and that corresponds to a block identifier, or content that is missing or is incorrectly transmitted. This is not limited in this embodiment of this application.

Optionally, the method 700 further includes the following step:
S750: The first device and/or the second device monitor/monitors performance of the AI model.

In a possible implementation, after the second device assembles the AI model, in a process of implementing a corresponding AI function by using the AI model, the first device and/or the second device may monitor performance after the AI model is applied, to determine whether performance of the AI model is improved in an application process, or whether the performance is improved as expected. For example, in an AI application scenario of CSI-RS feedback enhancement, the first device and/or the second device may monitor a downlink throughput after the AI model is applied, to determine whether the downlink throughput is improved as expected.

In a process of monitoring performance of the AI model, if the second device determines that the AI model needs to be updated, the second device may indicate, to the first device, that the AI model needs to be updated, so that the first device indicates a part that needs to be updated in the applied AI model, or indicates an updated AI model to the second device. Alternatively, in a process of monitoring performance of the AI model, if the first device determines that the AI model needs to be updated, the first device may indicate, to the second device, a part that needs to be updated in the applied AI model, or indicate an updated AI model to the second device. For example, the method 700 further includes the following step:
S760: The first device sends update information to the second device, where the update information indicates the second device to update the AI model. Correspondingly, the second device receives the update information from the first device.

The update information indicates a part that needs to be updated in the applied AI model, or indicates an updated AI model. In addition, for example, the update information may further indicate block partitioning information, to indicate a previously delivered block corresponding to related information of the AI model that is to be updated based on related information of the AI model included in the update information. After receiving the update information, the second device replaces the applied AI model or a characteristic part of the AI model. After completing the replacement, the second device may send response information to the first device. After receiving the response information, the first device may determine that the second device has completed the update of the AI model.

It may be understood that the transmission manner of the update information may be the transmission manner of transmitting the related information of the AI model in S710, or a transmission manner may be re-determined to transmit the update information. For details, refer to the transmission manner determining method in the method 500 or 600. Details are not described herein again.

For example, the first device is an access network device, and the second device is a terminal device. When the second device performs a cell handover, the first device may serve as a source cell to send the transmission manner (for example, the transmission manner determined by using the method 500 or 600) of the related information (for example, content transmitted in S710 or S760) of the AI model to a target access network device. When the second device has started a cell handover procedure before transmission of the related information of the AI model is completed, the source cell is to send, to the target access network device, the transmission manner of the related information of the AI model that has been acknowledged or is being transmitted, a configuration corresponding to the transmission manner (refer to the configuration described in S420), and a current transmission progress. After the second device completes a handover, the target access network device sends, to the second device based on content sent by the source cell, related information of the AI model that is not completely transmitted. Alternatively, the second device and the target access network device may re-determine the transmission manner of the related information of the to-be-transmitted AI model with reference to the method 500 or 600. This is not limited in this application.

For example, the first device is a terminal device, and the second device is an access network device. Before transmission of related information (for example, content transmitted in S710 or S760) of an AI model is completed, the first device has started a cell handover procedure, and the second device, as a source cell, is to send, to the target access network device, the transmission manner (for example, the transmission manner determined by using the method 500 or 600) of the related information of the AI model that has been acknowledged or is being transmitted, a configuration corresponding to the transmission manner (refer to the configuration described in S420), a current transmission progress, and a received part of the related information of the AI model. After the handover of the first device is completed, the first device sends, to the target access network device according to the determined transmission manner, related information of the AI model that is not completely transmitted. Alternatively, the first device and the target access network device may re-determine the transmission manner of the related information of the to-be-transmitted AI model with reference to the method 500 or 600. This is not limited in this application.

Based on the solution provided in the method 700, when the AI model needs to be updated, the first device can send the update information, so that the second device updates the AI model in a timely manner, to improve application performance of the AI model.

In this application, the "indication" may be an explicit indication and/or an implicit indication. For example, the implicit indication may be based on a position and/or a resource used for transmission; and the explicit indication may be based on one or more parameters, and/or one or more indexes, and/or one or more bit patterns represented by the explicit indication.

It may be understood that some optional features in embodiments of this application may be independent of other features in some scenarios, or may be combined with other features in some scenarios. This is not limited.

It may be understood that the solutions in embodiments of this application may be used in combination, and explanations or descriptions of terms, and similar operations or steps in the embodiments may be mutually referenced or explained in the embodiments. This is not limited in this application.

It may be further understood that, in the foregoing method embodiments, methods and operations implemented by the first device may alternatively be implemented by a component (for example, a chip, a chip system, a processor, or a circuit) of the first device. Methods and operations implemented by the second device may alternatively be implemented by a component (for example, a chip, a chip system, a processor, or a circuit) of the second device. Methods and operations implemented by a measurement and control device may alternatively be implemented by a component (for example, a chip, a chip system, a processor, or a circuit) of the measurement and control device. This is not limited in this application.

It should be understood that the term "and/or" in this application describes only an association relationship between associated objects and represents that three relationships may exist. For example, A and/or B may represent the following three cases: Only A exists, both A and B exist, and only B exists, where A and B may be singular or plural. In addition, the character "/" in this specification usually represents an "or" relationship between the associated objects, but may also represent an "and/or" relationship. For details, refer to the context for understanding.

In this application, "at least one item (piece)" means one or more items (pieces), and "at least two items (pieces)" and "a plurality of items (pieces)" mean two or more items (pieces). "At least one of the following items (pieces)" or a similar expression thereof means any combination of these items, including a singular item (piece) or any combination of plural items (pieces). For example, at least one of a, b, or c may indicate: a, b, c, a and b, a and c, b and c, or a, b, and c, where a, b, and c may be singular or plural. Unless otherwise specified, "a plurality of" in this application means two or more than two.

It may be understood that "sending information to XX (device)" in this application may be understood as: a destination of the information is the device, and may include directly or indirectly sending the information to the device. "Receiving information from XX (device)" may be understood as: a source of the information is the device, and may include directly or indirectly receiving information from the device. Information may undergo necessary processing between the source for sending the information and the destination, for example, a format change. However, the destination may understand valid information from the source.

The foregoing describes the method embodiments in embodiments of this application with reference to the accompanying drawings, and the following describes apparatus embodiments in embodiments of this application. It may be understood that the descriptions of the method embodiments and the descriptions of the apparatus embodiments may correspond to each other. Therefore, for a part that is not described, refer to the foregoing method embodiments.

The foregoing mainly describes the solutions provided in embodiments of this application from a perspective of interaction between network elements. It may be understood that, to implement the foregoing functions, each network element such as a transmitter device or a receiver device includes a corresponding hardware structure and/or software module for performing each function. A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the transmitter device or the receiver device may be divided into functional modules based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, division into the modules is an example, and is merely a logical function division. In actual implementation, another division manner may be used. An example in which each functional module is obtained through division based on each corresponding function is used below for description.

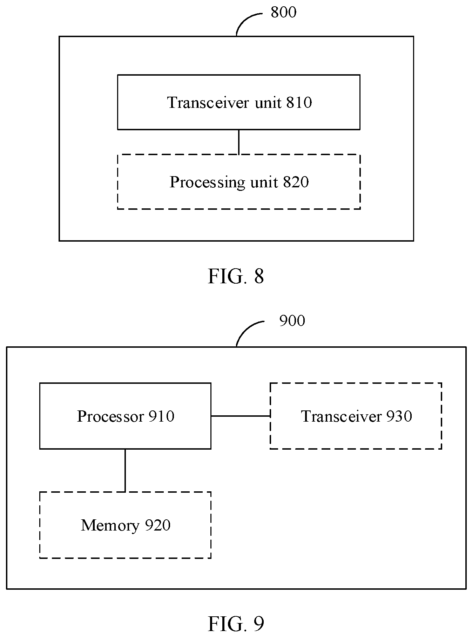

FIG. 8 is a diagram of a structure of a communication apparatus 800 according to an embodiment of this application. The apparatus 800 includes a transceiver unit 810. The transceiver unit 810 may be configured to implement a corresponding communication function. The transceiver unit 810 may also be referred to as a communication interface or a communication unit.

Optionally, the apparatus 800 further includes a processing unit 820. The processing unit 820 may be configured to process data.

Optionally, the apparatus 800 further includes a storage unit. The storage unit may be configured to store instructions and/or data. The processing unit 820 may read the instructions and/or the data in the storage unit, to enable the apparatus to implement actions of the first device in the foregoing method embodiments.

In a first design, the apparatus 800 may be the first device in the foregoing embodiments, or may be a component (for example, a chip) of the first device. The apparatus 800 may implement steps or procedures performed by the first device in the foregoing method embodiments. The transceiver unit 810 may be configured to perform receiving/sending-related operations of the first device in the foregoing method embodiments. The processing unit 820 may be configured to perform processing-related operations of the first device in the foregoing method embodiments.

The apparatus 800 may implement the steps or the procedures performed by the first device in the method embodiments according to embodiments of this application. The apparatus 800 may include units configured to perform the method performed by the first device in the embodiments shown in FIG. 4 to FIG. 7.

In a possible implementation, the transceiver unit 810 is configured to obtain a transmission manner of related information of an AI model, and the transceiver unit 810 is further configured to send the related information of the AI model to a second device in the transmission manner. The first device is an access network device, and the second device is a terminal device; or the first device is a terminal device, and the second device is an access network device.

Optionally, the transceiver unit 810 is further configured to receive first reference information from the second device, and the processing unit 820 is configured to determine the transmission manner based on the first reference information.

Optionally, the first reference information includes at least one of the following: information about a first candidate AI model set expected by the second device, buffering capability information of the second device, transmission latency requirement information, or information about a transmission manner expected by the second device.

Optionally, the transceiver unit 810 is further configured to send first indication information to the second device, where the first indication information indicates the transmission manner.

Optionally, the transceiver unit 810 is further configured to receive second indication information from the second device, where the second indication information indicates the transmission manner. The transceiver unit 810 is specifically configured to obtain the transmission manner based on the second indication information.

Optionally, the transceiver unit 810 is further configured to send second reference information to the second device, where the second reference information includes at least one of information about a second candidate AI model set or information about a candidate transmission manner. The transceiver unit 810 is further configured to: receive third indication information from the second device, and obtain the transmission manner based on the third indication information. The third indication information indicates the transmission manner determined based on the second reference information, and the second reference information is determined based on the first reference information.

Optionally, when the second reference information includes the information about the second candidate AI model set, the AI model indicated by the third indication information is determined based on the information about the second candidate AI model set; or when the second reference information includes the information about the candidate transmission manner, the transmission manner indicated by the third indication information is determined based on the information about the candidate transmission manner.

Optionally, the transmission manner is transmitting the related information of the AI model as a whole, or transmitting the related information of the AI model in blocks.

Optionally, the transmission manner is transmitting the related information of the AI model in blocks, and the related information of the AI model includes block identifiers.

Optionally, the transceiver unit 810 is further configured to send update information to the second device, where the update information is used to update the AI model.

Optionally, a transmission path of the related information of the AI model includes user plane transmission and/or control plane transmission.

In another design, the apparatus 800 may be the second device in the foregoing embodiments, or may be a component (for example, a chip) of the second device. The apparatus 800 may implement steps or procedures performed by the second device in the foregoing method embodiments. The transceiver unit 810 may be configured to perform receiving/sending-related operations of the second device in the foregoing method embodiments. The processing unit 820 may be configured to perform processing-related operations of the second device in the foregoing method embodiments.

The apparatus 800 may implement the steps or the procedures performed by the second device in the method embodiments according to embodiments of this application. The apparatus 800 may include units configured to perform the method performed by the second device in the embodiments shown in FIG. 4 to FIG. 7.

In a possible implementation, the transceiver unit 810 is configured to obtain a transmission manner of related information of an AI model, and the transceiver unit 810 is further configured to receive the related information of the AI model from a first device in the transmission manner. The first device is an access network device, and the second device is a terminal device; or the first device is a terminal device, and the second device is an access network device.

Optionally, the transceiver unit 810 is further configured to send first reference information to the first device, where the first reference information is used to determine the transmission manner.

Optionally, the first reference information includes at least one of the following: information about a first candidate AI model set expected by the second device, buffering capability information of the second device, transmission latency requirement information, or information about a transmission manner expected by the second device.

Optionally, the transceiver unit 810 is further configured to: receive first indication information from the first device; and obtain the transmission manner based on the first indication information.

Optionally, the transceiver unit 810 is further configured to send second indication information to the first device, where the second indication information indicates the transmission manner.

Optionally, the transceiver unit 810 is further configured to receive second reference information from the first device, where the second reference information includes at least one of information about a second candidate AI model set or information about a candidate transmission manner. The processing unit 820 is configured to determine the transmission manner based on the second reference information. The transceiver unit 810 is further configured to send third indication information to the first device, where the third indication information indicates the transmission manner determined based on the second reference information, and the second reference information is determined based on the first reference information.

Optionally, when the second reference information includes the information about the second candidate AI model set, the AI model indicated by the third indication information is determined based on the information about the second candidate AI model set; or when the second reference information includes the information about the candidate transmission manner, the transmission manner indicated by the third indication information is determined based on the information about the candidate transmission manner.

Optionally, the transmission manner is transmitting the related information of the AI model as a whole, or transmitting the related information of the AI model in blocks.

Optionally, the transmission manner is transmitting the related information of the AI model in blocks, and the related information of the AI model includes block identifiers.

Optionally, the transceiver unit 810 is further configured to receive update information from the first device. The processing unit 820 is configured to update the AI model based on the update information.

Optionally, a transmission path of the related information of the AI model includes user plane transmission and/or control plane transmission.

FIG. 9 is a diagram of a structure of a communication apparatus 900 according to an embodiment of this application. The apparatus 900 includes a processor 910. The processor 910 is coupled to a memory 920, the memory 920 is configured to store a computer program or instructions and/or data, and the processor 910 is configured to: execute the computer program or the instructions stored in the memory 920, or read the data stored in the memory 920, to perform the method in the foregoing method embodiments.

In some embodiments, there are one or more processors 910.

In some embodiments, there are one or more memories 920.

In some embodiments, the memory 920 and the processor 910 are integrated together, or are disposed separately.

In some embodiments, as shown in FIG. 9, the apparatus 900 further includes a transceiver 930. The transceiver 930 is configured to receive and/or send a signal. For example, the processor 910 is configured to control the transceiver 930 to receive and/or send a signal.

In a solution, the apparatus 900 is configured to implement operations performed by the first device in the foregoing method embodiments.

In another solution, the apparatus 900 is configured to implement operations performed by the second device in the foregoing method embodiments.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should be further noted that the memory described herein is intended to include, but is not limited to, these and any other appropriate type of memory.

An embodiment of this application further provides a computer-readable storage medium. The computer-readable storage medium stores computer instructions used to implement the methods performed by the first device in the foregoing method embodiments, or stores computer instructions used to implement the methods performed by the second device in the foregoing method embodiments.

An embodiment of this application further provides a computer program product, including instructions. When the instructions are executed by a computer, the method performed by the first device in the foregoing method embodiments is implemented; or when the instructions are executed by a computer, the method performed by the second device in the foregoing method embodiments is implemented.

An embodiment of this application further provides a communication system, including the foregoing first device and second device.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk drive, a read-only memory (read-only memory, ROM), a random access memory (random access memory, RAM), a magnetic disk, or an optical disc.

## Claims

1. A communication method, comprising:
obtaining, by a first device, a transmission manner of related information of an artificial intelligence AI model; and
sending, by the first device, the related information of the AI model to a second device in the transmission manner, wherein
the first device is an access network device, and the second device is a terminal device; or the first device is a terminal device, and the second device is an access network device.

2. The method according to claim 1, wherein the method further comprises:
receiving, by the first device, first reference information from the second device; and
obtaining, by the first device, the transmission manner of the related information of the AI model comprises:
determining, by the first device, the transmission manner based on the first reference information.

3. The method according to claim 2, wherein the first reference information comprises at least one of the following:
information about a first candidate AI model set expected by the second device, buffering capability information of the second device, transmission latency requirement information, or information about a transmission manner expected by the second device.

4. The method according to any one of claims 1 to 3, wherein the method further comprises:
sending, by the first device, first indication information to the second device, wherein the first indication information indicates the transmission manner.

5. The method according to any one of claims 1 to 3, wherein the method further comprises:
receiving, by the first device, second indication information from the second device, wherein the second indication information indicates the transmission manner; and
obtaining, by the first device, the transmission manner of the related information of the AI model comprises:
obtaining, by the first device, the transmission manner based on the second indication information.

6. The method according to claim 3, wherein the method further comprises:
sending, by the first device, second reference information to the second device, wherein the second reference information comprises at least one of information about a second candidate AI model set or information about a candidate transmission manner; and
receiving, by the first device, third indication information from the second device; and
determining, by the first device, the transmission manner based on the first reference information comprises:
obtaining, by the first device, the transmission manner based on the third indication information, wherein the third indication information indicates the transmission manner determined based on the second reference information, and the second reference information is determined based on the first reference information.

7. The method according to claim 6, wherein when the second reference information comprises the information about the second candidate AI model set, the AI model indicated by the third indication information is determined based on the information about the second candidate AI model set; or when the second reference information comprises the information about the candidate transmission manner, the transmission manner indicated by the third indication information is determined based on the information about the candidate transmission manner.

8. The method according to any one of claims 1 to 7, wherein the transmission manner is transmitting the related information of the AI model as a whole, or transmitting the related information of the AI model in blocks.

9. The method according to any one of claims 1 to 8, wherein the transmission manner is transmitting the related information of the AI model in blocks, and the related information of the AI model comprises block identifiers.

10. The method according to any one of claims 1 to 9, wherein the method further comprises:
sending, by the first device, update information to the second device, wherein the update information is used to update the AI model.

11. The method according to any one of claims 1 to 10, wherein a transmission path of the related information of the AI model comprises user plane transmission and/or control plane transmission.

12. A communication method, comprising:
obtaining, by a second device, a transmission manner of related information of an artificial intelligence AI model; and
receiving, by the second device, the related information of the AI model from a first device in the transmission manner, wherein
the first device is an access network device, and the second device is a terminal device; or the first device is a terminal device, and the second device is an access network device.

13. The method according to claim 12, wherein the method further comprises:
sending, by the second device, first reference information to the first device, wherein the first reference information is used to determine the transmission manner.

14. The method according to claim 13, wherein the first reference information comprises at least one of the following:
information about a first candidate AI model set expected by the second device, buffering capability information of the second device, transmission latency requirement information, or information about a transmission manner expected by the second device.

15. The method according to any one of claims 12 to 14, wherein the method further comprises:
receiving, by the second device, first indication information from the first device; and
obtaining, by the second device, the transmission manner of the related information of the artificial intelligence AI model comprises:
obtaining, by the second device, the transmission manner based on the first indication information.

16. The method according to any one of claims 12 to 14, wherein the method further comprises:
sending, by the second device, second indication information to the first device, wherein the second indication information indicates the transmission manner.

17. The method according to claim 14, wherein the method further comprises:
receiving, by the second device, second reference information from the first device, wherein the second reference information comprises at least one of information about a second candidate AI model set or information about a candidate transmission manner; and
obtaining, by the second device, the transmission manner of the related information of the AI model comprises:
determining, by the second device, the transmission manner based on the second reference information; and
sending, by the second device, third indication information to the first device, wherein the third indication information indicates the transmission manner determined based on the second reference information, and the second reference information is determined based on the first reference information.

18. The method according to claim 17, wherein when the second reference information comprises the information about the second candidate AI model set, the AI model indicated by the third indication information is determined based on the information about the second candidate AI model set; or when the second reference information comprises the information about the candidate transmission manner, the transmission manner indicated by the third indication information is determined based on the information about the candidate transmission manner.

19. The method according to any one of claims 12 to 18, wherein the transmission manner is transmitting the related information of the AI model as a whole, or transmitting the related information of the AI model in blocks.

20. The method according to any one of claims 12 to 19, wherein the transmission manner is transmitting the related information of the AI model in blocks, and the related information of the AI model comprises block identifiers.

21. The method according to any one of claims 12 to 20, wherein the method further comprises:
receiving, by the second device, update information from the first device; and
updating, by the second device, the AI model based on the update information.

22. The method according to any one of claims 12 to 21, wherein a transmission path of the related information of the AI model comprises user plane transmission and/or control plane transmission.

23. A communication apparatus, comprising a unit or a module configured to perform the method according to any one of claims 1 to 11, or a unit or a module configured to perform the method according to any one of claims 12 to 22.

24. A communication apparatus, comprising at least one processor, wherein the at least one processor is configured to execute a computer program stored in a memory, to enable the apparatus to perform either of the following:
the method according to any one of claims 1 to 11, and the method according to any one of claims 12 to 22.

25. The apparatus according to claim 24, wherein the apparatus further comprises the memory and/or a communication interface, and the communication interface is coupled to the processor; and
the communication interface is configured to input and/or output information.

26. A communication system, comprising a first device and a second device, wherein the first device is configured to perform the method according to any one of claims 1 to 11, and the second device is configured to perform the method according to any one of claims 12 to 22.

27. A computer-readable storage medium, comprising a computer program, wherein
when the computer program is run on a computer, the computer is enabled to perform the method according to any one of claims 1 to 11; or
when the computer program is run on a computer, the computer is enabled to perform the method according to any one of claims 12 to 22.

28. A computer program product, wherein the computer program product comprises computer program code, wherein
when the computer program code is run on a computer, the computer is enabled to implement the method according to any one of claims 1 to 11; or
when the computer program code is run on a computer, the computer is enabled to implement the method according to any one of claims 12 to 22.
